(19) Europäisches Patentamt
European Patent Office
Office européen des brevets

(11) Publication number: 0 168 131 B1

# (12) EUROPEAN PATENT SPECIFICATION

(45) Date of publication of patent specification: 12.07.89

(51) Int. Cl.[4]: C 08 J 5/06, D 06 M 10/00

(21) Application number: 85302685.4

(22) Date of filing: 17.04.85

## (54) Method for adhering of aromatic polyamide fibers to rubber.

(30) Priority: 25.05.84 JP 104671/84
12.12.84 JP 260891/84

(43) Date of publication of application:
15.01.86 Bulletin 86/03

(45) Publication of the grant of the patent:
12.07.89 Bulletin 89/28

(84) Designated Contracting States:
DE FR GB IT

(56) References cited:
EP-A-0 006 275
FR-A-2 069 682
GB-A-1 368 527
US-A-4 469 748

The file contains technical information submitted after the application was filed and not included in this specification

(73) Proprietor: Bridgestone Corporation
10-1, Kyobashi 1-Chome Chuo-Ku
Tokyo 104 (JP)

(72) Inventor: Fukuura, Yukio
19-1, Nakahara-cho 2-chome
Kawagoe City Saitama Prefecture (JP)
Inventor: Yoshikawa, Masato
39-12 Koenjikita 2-chome
Suginami-ku Tokyo (JP)
Inventor: Akiyama, Setsuo
5-5 Ogawahigashimachi 3-chome
Kodaira City Tokyo (JP)
Inventor: Naito, Kazuo
969-1, Maginu Miyamae-ku
Kawasaki City Kanagawa Prefecture (JP)
Inventor: Honda, Toshio
1562-34, Ninomiya
Akigawa City Tokyo (JP)

(74) Representative: Quest, Barry et al
M'CAW & Co. 41-51 Royal Exchange Cross Street
Manchester M2 7BD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 168 131 B1

Courier Press, Leamington Spa, England.

**Description**

## FIELD OF THE INVENTION

The invention relates to a method for firmly adhering of aromatic polyamide fibers to rubber so as to provide tires, conveyor belts, rubber crawlers and the like reinforced by said aromatic polyamide fibers of excellent thermal and chemical resistances as well as satisfactorily high mechanical strength and modulus of elasticity in which aliphatic polyamide fibers having hitherto been preferably used in view of high adhesion to rubber are weak.

## BACKGROUND OF THE INVENTION

Aromatic polyamides such as poly-m-phenylene-iso-phthalamide and poly-p-phenylene-terephthalamide are generally superior to aliphatic polyamides in thermal and chemical resistances as well as dimensional stability owing to the higher modulus of elasticity and mechanical strength.

Consequently aromatic polyamides have been used in various fields for forming a composite material by combining thereof with thermoplastic or thermosetting polymer, natural or synthetic rubber. Since such composite material is as good as the steel cord in the mechanical strength and yet of lightness and softness, it has been evaluated to be suitable particularly as the material for reinforcing the tire.

Aromatic polyamide fibers having the desirable characteristics referred to above is, however, still disadvantageous in that they are weak in flex and fatigue due to poor flexibility. Although it is preferable to prepare a composite material of such aromatic polyamide fibers with other material in order to utilize good thermal resistance and high mechanical strength and cover said weak points, necessary adhesion thereof with other materials, above all with rubber is fatally poor.

In case of reinforcing e.g. the tires, either of fatigue-resistance and adhesiveness of aromatic polyamide fibers with the tire rubber by means of an adhesive comprising resorcinol-formaldehyde precondensate and rubber latex (to be called "RFL" hereafter) having widely been used is inferior to aliphatic polyamide such as 6-nylon and 6,6-nylon.

Thus, a two-step-bonding method has recently been proposed by DuPont, according to which firstly an undercoating agent of the following formulation is applied and then said RFL is applied for bonding aromatic polyamide fibers with rubber;

| | |
|---|---|
| Water | 850 g |
| Aqueous solution of 10% NaOH | 10 g |
| Aqueous solution of 5% dioctyl sodium sulfosuccinate | 20 g |
| 2-Pyrrolidone | 100 g |
| Diglycidyl ether of glycerol | 20 g |
| | 1000 g |

Various improvements inclusive of the above have been directed mainly to such undercoating agent with intending increase of epoxy-group content. It is obvious, however, that the more the adhesive layer involves epoxy-group content, the higher becomes the rigidity of the fiber cord to inevitably lower flexibility, fatigue resistance and other concerned properties.

## SUMMARY OF THE INVENTION

It is an object of the invention, thus, to provide a method for adhereing of aromatic polyamide fibers to rubber with overcoming the defects mentioned above.

It is the other object to provide tires, conveyor belts, rubber crawlers and the like reinforced by firmly bonding aromatic polyamide fibers of excellent thermal and chemical resistances as well as satisfactorily high mechanical strength and modulus of elasticity, in which aliphatic polyamide fibers having hitherto been preferably used in view of high adhesion to rubber are weak.

The other objects and concerned advantages will be appreciated by studying explanations to be made in more detail hereafter.

The method for adhering of aromatic polyamide fibers to rubber according to the invention is characterized by treating said fibers in an environment of low temperature plasma gas under reduced pressure, impregnating said fibers with an adhesive comprising a precondensate of a phenol with an aldehyde and a rubber latex (referred to as 'PFL' hereafter), heating said fibers impregnated with said adhesive, fixing said fibers onto unvulcanized rubber, and heating with pressing said two together for vulcanization and adhesion.

Said precondensate to be mixed with rubber latex is preferably prepared according to the invention by reacting the phenol with the aldehyde in the presence of an alkali metal hydroxide as catalyst, neutralizing the resulting reaction product with an acid, and dissolving resinous product separated therefrom to involve no freed aldehyde in diluted aqueous ammonia.

Said low temperature plasma gas to be used in the invention may be nonpolymerizable gas, polymerizable gas, thermally vapourized gas or mixture thereof, which is excited by audiowaves, high frequency waves or microwaves.

## DETAILED EXPLANATION OF THE INVENTION

Aromatic polyamides having an aromatic group and amido-bonding in the molecule in the polymer unit are represented typically by poly-p-phenylene terephthalamide, poly-m-phenylene terephthalamide and poly-p-benzamide. Filaments of such aromatic polyamide are fed to a zone of reduced pressure of $10^{-3}$—10 Torr (0.133—1333 Pa) to be subjected to treatment in an ambient of nonpolymerizable gas, polymerizable gas, thermally vapourized gas or mixture theeof which is excited by audiowaves, high frequency waves or microwaves, impregnated with an aqueous solution comprising PFL adhesive and then thermally set.

Owing to treatment of aromatic polyamide fibers with low temperature plasma, it is considered that hydrophilic groups are formed at the surface or the wetting thereof with water soluble PFL is considerably improved so that the adhesive is not only well adhered onto fibers but also interfilamentarily impregnated to improve anti-flex property.

The physical properties such as elongation of aromatic polyamide fibers treated with low temperature plasma according to the invention are not deteriorated but rather improved different from such fibers as having been treated with ozone, acid or ultraviolet ray. As a result thereof, deterioration rate in physical properties of such aromatic polyamide fibers bonded to rubber due to fatigue is considerably improved.

As plasma gas, helium, hydrogen, argon, oxygen, nitrogen, air, chlorine, ammonia, carbon monoxide, carbon dioxide, sulfur dioxide gas, nitrogen monoxide, formaldehyde, hydrogen chloride as well as gas thermally vapourized under reduced pressure and gas vapourized at a room temperature under reduced pressure such as cargon tetrafluoride gas, carbon tetrachloride gas, halogenated hydrocarbon gas (e.g. trichlene or tetrafluoromethane gas), gas from aqueous formaldehyde, vapour from water, methylamine gas, gas from aqueous ammonia or any mixture thereof is preferably used. The treatment zone filled with such gas can be subjected to a decreased pressure of $10^{-3}$—10 Torr (0.133—1333 Pa) and the gas excited by audiowaves, high frequency waves or microwaves of 1 w—10 kw output for 1—$10^3$ seconds.

In order to continuously proceed with plasma treatment, either the tightly closed chamber in which there are provided feeding and taking-up devices for endless fibers, or the semi-sealed chamber having feeding and taking-up devices outside thereof and a plurality of seal means for dividing said chamber into many sections so that ambient pressure is gradually decreased towards the central section thereof according to differential pressure method is preferably used.

The adhesive to be used in the invention is prepared by reacting a phenol with an aldehyde in liquid medium such as water in the presence of an alkali metal hydroxide such as sodium and kalium hydroxides, adding organic acid such as acetic acid or inorganic acid such as hydrochloric acid, separating resinous product so as not to involve any freed aldehyde, dissolving said separated resinous product in aqueous solution of ammonium hydroxide, and adding rubber latex.

The phenols to be used in the invention may involve monophenols and polyphenols which may be substituted. As monophenols, there may be enumerated e.g. phenol, cresol, ethylphenol and xylenol. As polyphenols, there may be enumerated e.g. resorcinol, hydroquinone, phloroglucinol, orcinol, cresorcinol and m-xylocinol. The phenols to be preferably used in the invention are phenol, m-cresol, p-cresol and resorcinol, among which phenol and resorcinol are most preferable.

The aldehydes to be used in the invention may involve every compound having an aldehyde group or groups and reactive to the phenols, which involve furfural, acrolein etc. but formaldehyde is most preferable.

The reaction between a phenol and an aldehyde in the presence of an alkali metal hydroxide is carried out under the atmospheric pressure at a temperature of 30°—100°C, and more particularly 70°—95°C. The reaction time is to be decided depending on the temperature and catalyst amount. For instance when the reaction is to be carried out at 80°C the catalyst amount is preferably decided so that the reaction is over in 1—3 h.

The amount of an alkali metal hydroxide to be used as catalyst preferably ranges from 0.01 to 0.2 mols, and more particulalry from 0.05 to 0.15 mols in relation to 1 mol of a phenol.

The amount of an aldehyde is important, which is preferably more than 0.8 mols, and more particularly from 1.5 to 10 mols in relation to 1 mol of a phenol. The aldehyde may be used in the amount of more than 3 mols and more preferably of from 4 mols to 10 mols in relation to said phenol, m-cresol, m-methoxyphenol or m-chlorophenol.

The reaction degree may be judged by a mean molecular weight and a molecular weight distribution curve. It is preferably to proceed with the reaction so that the mean molecular weight of the reaction product is in the range of 200—2500, and more particularly 500—1500. This range is not so critical as to

affect on the adhesion, but the upper and lower limits of the molecular weight distribution preferably lie in said range as far as possible.

After completion of the reaction, an organic acid such as acetic acid or an inorganic acid such as hydrochloric acid is added to the reaction product for neutralization so that the resinous product may be separated.

When filtering the separated product, washing with water and then drying in air or under decreased pressure, the objective condensate if obtained. If the separated wet product before drying is dissolved in an organic solvent of low boiling point such as acetone and then subjected to vacuum drying, the objective condensate may be obtained in less time.

The resinous condensate may be readily dissolved in a diluted aqueous solution of ammonium hydroxide. When the molecular weight is larger, the amount of said ammonium hydroxide is correspondingly increased.

To said solution, rubber latex is added to prepare the adhesive to be used in the invention. The rubber latex may be of natural rubber or any of various synthetic rubbers, among which the latex of vinylpyridine-styrene-butadiene terpolymer, styrenebutadine copolymer and polybutadiene are preferably used. The latex of polychloroprene, acrylonitrile-acrylic acid-butadiene terpolymer, acrylonitrile-alkyl methacrylate-butadiene terpolymer, isoprene-isobutylene copolymer, ethylene-propylene copolymer and ethylene-propylene-nonconjugated diene terpolymer may also be used. The above rubber latex may be used in single or in any mixture thereof depending on the kind of rubber to be bonded with the aromatic polyamide fibers.

The rubber latex and the phenol-aldehyde precondensate are preferably mixed in 95—70 weight % and 5—30 weight % respectively relative to the total solid content in the mixture.

When resorcinol is used as the phenol, it has been found that the adhesive prepared by mixing the first adhesive comprising the precondensate which is prepared by reaction of resorcinol with formaldehyde according to the process referred to above with another adhesive comprising a lower molecular weight of precondensate added with a polyphenol polysulfide in the equal amount, may further improve the adhesiveness of aromatic polyamide fibers with rubber. In this case the higher molecular weight precondensate of the first adhesive can be made by reacting 0.8—7.5 mols of formaldehyde with 1 mol of resorcinol and said lower molecular weight of precondensate can be prepared by reacting 0.05—0.8 mols formamide with 1 mol resorcinol. The polyphenol polysulfide to be used in the invention is represented by a formula;

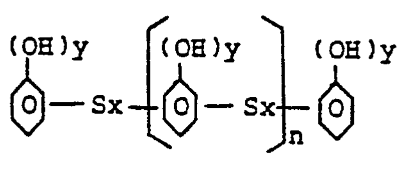

in which x represents 1—6, y represents 2—3 and n represents 1—15.

In such a case, the first precondensate of resorcinol with formaldehyde in the amount of 2.5—15.0 weight %, the lower molecular weight precondensate of 5—50 weight %, polyphenol polysulfide 1.0—10.0 weight % and rubber latex 30—70 weight % are preferably used.

The invention shall be explained in more detail in reference to the following examples, in which the adhesives to be explained hereafter are used.

Four phenols, e.g. phenol, m-cresol, m-methoxyphenol and m-chlorophenol are used for preparing four sorts of adhesives A, B, C and D. Each of said phenols 1.0 mol, an aqueous solution of 37% formaldehyde 5.0 mols and caustic soda 0.1 mols are reacted in a flask provided with a reflux condenser with a stirring at a temperature of 80°C for 1.5 h. After cooling, 6N acetic acid is added for neutralization to cause precipitation. The precipitant is subjected to centrifugal separation, dissolved in aceton, dried in vacuum at 50°C in the rotary evaporator, and pulverized to obtain powdery resinous product.

Said resinous product of 40 parts is dissolved in an aqueous solution of 28% ammonia of 50 parts diluted with 500 parts water, to which 400 parts of 40% vinylpyridine-styrene-butadiene terpolymer latex (JSR 0650 manufactured by Japan Synthetic Rubber Co., Ltd.) is mixed with well stirring so as to be directly used as adhesive.

Example 1

Multifilament cord (1500-D/2, 30S × 30Z) of poly-p-phenylene terephtalamide (Du Pont; Kevlar (R) 29) was continuously passed through a semi-closed chamber adapted to be differentially decompressed so that the central zone thereof was set at a pressure of 1 Torr and provided with a microwave generator for generating microwaves of 2.45 GHz at the 1 KW output for exciting a gas in said zone to be in plasma. As shown in the following Table 1, nine sorts of gasses were used, which are air, oxygen, nitrogen, argon, helium, carbon monoxide, carbon dioxide, sulfur dioxide gas and nitrogen monoxide. The cord feeding rate was adjusted so as to stay in plasma of each gas respectively for 20 seconds and 120 seconds to be shown in said Table 1.

The cord thus treated with plasma was impregnated with the adhesive A, dried at 140°C for 30 seconds and heated at 240°C for 60 seconds.

The treated fiber cord of a length of 200 mm was expanded in the metallic tray of 2 mm depth on which an unvulcanized rubber composition to be referred to hereafter of the corresponding shape and backed with a reinforcing fabric was laid to be bonded together and vulcanized at 160°C for 20 minutes. By peeling the cord from the vulcanized rubber to be subjected to the tensile test at a rate of 300 mm/min. of which results are shown in Table 1.

Said unvulcanized rubber composition is;

| | |
|---|---|
| RSS #3 | 80.0 g |
| IR | 20.0 g |
| Zinc white | 5.0 g |
| N-phenyl-N-isopropyl-p-phenylenediamine | 1.0 g |
| Stearic acid | 2.0 g |
| HAF carbon black | 50.0 g |
| Aromatic oil | 5.0 g |
| Sulphur | 2.5 g |
| Dibenzothiazylsulfide | 1.0 g |
| | 166.5 g |

Table 1 (Microwave-excited Plasma)

| Exper.No. | Gas | Treatment Time (sec.) | Adhesion Against Peeling<br>Adhesive A Kg/single cord |
|---|---|---|---|
| 1 | Air | 20 | 1.5 |
| | | 120 | 2.2 |
| 2 | $O_2$ | 20 | 2.1 |
| | | 120 | 2.8 |
| 3 | $N_2$ | 20 | 1.4 |
| | | 120 | 2.3 |
| 4 | Ar | 20 | 2.1 |
| | | 120 | 2.7 |
| 5 | He | 20 | 1.5 |
| | | 120 | 1.9 |
| 6 | CO | 20 | 2.0 |
| | | 120 | 2.5 |
| 7 | $CO_2$ | 20 | 1.8 |
| | | 120 | 2.1 |
| 8 | $SO_2$ | 20 | 1.5 |
| | | 120 | 2.2 |
| 9 | NO | 20 | 1.5 |
| | | 120 | 2.3 |
| Comp.Exp.1 | | Nontreatment Adhesive A | 0.8 |

In comparative Experiment 1, the same multifilament cord was bonded to the same unvulcanized rubber without plasma treatment and similarly treated. The adhesive 0.8 kg in this control is considerably inferior to any result of Experiments 1—9.

Example 2

Experiments were made similar to those in Example 1 but the gas was excited by high frequency waves of 13.56 MHz at the 100 W output. The pressure in the zone for plasma treatment was lowered below 0.1 Torr (13.3 Pa) and then the gas was introduced from the inlet therefor so as to set said pressure at 1.0 Torr (133.3 Pa).

The samples were subjected to the peeling test similar to Example 1, of which results are shown in Table 2.

Table 2 (High-Frequency Wave Excited Plasma)

| Exper.No. | Gas | Treatment Time (sec.) | Adhesion Against Peeling<br>Adhesive A Kg/single cord |
|---|---|---|---|
| 10 | Air | 20 | 1.8 |
| | | 120 | 2.4 |
| 11 | $O_2$ | 20 | 2.2 |
| | | 120 | 3.0 |
| 12 | $N_2$ | 20 | 1.7 |
| | | 120 | 2.3 |
| 13 | Ar | 20 | 2.1 |
| | | 120 | 2.8 |
| 14 | He | 20 | 1.4 |
| | | 120 | 2.1 |
| 15 | CO | 20 | 2.1 |
| | | 120 | 2.8 |
| 16 | $CO_2$ | 20 | 1.9 |
| | | 120 | 2.2 |
| 17 | $SO_2$ | 20 | 2.1 |
| | | 120 | 2.4 |
| 18 | NO | 20 | 2.0 |
| | | 120 | 2.3 |

Example 3

Similar to Example 2 the same cord was treated with plasma of air, oxygen and argon excited by the same high-frequency waves, but Adhesives B, C and D were used instead of Adhesive A.

The results of the similar test are shown in Table 3.

Table 3 (High Frequency Wave Excited Plasma)

| Exper. No. | Adhesive | Plasma Condition Gas | Treatment time(sec.) | Adhesion Against Peeling kg/single cord |
|---|---|---|---|---|
| 19 | Adhesive B | Air | 20 | 1.5 |
| | | | 120 | 2.3 |
| 20 | | $O_2$ | 20 | 2.3 |
| | | | 120 | 2.9 |
| 21 | | Ar | 20 | 2.0 |
| | | | 120 | 2.9 |
| 22 | Adhesive C | Air | 20 | 1.6 |
| | | | 120 | 2.1 |
| 23 | | $O_2$ | 20 | 1.9 |
| | | | 120 | 2.7 |
| 24 | | Ar | 20 | 1.8 |
| | | | 120 | 2.5 |
| 25 | Adhesive D | Air | 20 | 1.6 |
| | | | 120 | 2.1 |
| 26 | | $O_2$ | 20 | 2.0 |
| | | | 120 | 2.8 |
| 27 | | Ar | 20 | 2.0 |
| | | | 120 | 2.6 |
| | | Nontreatment | | |
| Adhesive B | | Comp. Exp. 2 | | 0.9 |
| Adhesive C | | Comp. Exp. 3 | | 0.6 |
| Adhesive D | | Comp. Exp. 4 | | 0.6 |

Example 4

As to the cords treated with plasma for 20 seconds in Examples 2 and 3, anti-fatigue tests were made according to the belt bending method and tensile strength measurement.

In the metallic tray of 50 cm length, 5 cm width and 1 cm depth, 50 pieces of treated cords are lengthwise arranged in parallel to one another, on which the unvulcanized rubber mat similar to that in Example 1 to be heated at 160°C with pressing for 20 minutes to be vulcanized and bonded together.

Flex fatigue was imparted to said sample 500,000 times repeatedly by means of belt bending tester of pulley diameter of 32 and 125 kg load. Cords taken out of the sample were subjected to the tensile test at a cross head speed rate of 300 mm/min so as to compare those before and after imparting fatigue, of which results are shown in Table 4.

Table 4

| Exper. No. | Fiber Cord Physical Properties | | |
|---|---|---|---|
| | Initial Tensil Strength(kg) | Initial Elongation (%) | Strength Holding Rate (%) |
| 10 | 50 | 4.9 | 59 |
| 11 | 51 | 4.9 | 53 |
| 12 | 49 | 4.9 | 57 |
| 13 | 49 | 4.9 | 60 |
| 14 | 49 | 4.8 | 60 |
| 15 | 52 | 5.0 | 59 |
| 16 | 50 | 5.0 | 60 |
| 17 | 49 | 4.9 | 51 |
| 18 | 50 | 4.9 | 55 |
| 20 | 52 | 5.1 | 52 |
| 23 | 52 | 5.0 | 53 |
| 26 | 49 | 4.9 | 52 |
| Comp.Exp. 1 | 50 | 4.9 | 62 |
| 2 | 51 | 5.0 | 59 |
| 3 | 49 | 4.9 | 53 |
| 4 | 52 | 5.1 | 55 |

Example 5

Just same treatments were repeated as in Example 1 except the adhesives, of which results are shown in following Table 5.

Adhesive E was prepared by using water 520.0 g, resorcinol 19.0 g, 35% aqueous solution of formalin 24.0 g, 29% aqueous ammonia 17.0 g, 40% vinylpyridinestyrene-butadiene terpolymer latex 210.0 g and 40% styrene-butadiene rubber latex 210.0 g.

Adhesive F was prepared by mixing the above with a solution of water 700.0 g, a lower polymer precondensate prepared by reacting 0.35 mol formaldehyde with 1 mol resorcinol in the amount of 115.0 g, a polyphenol polysulfide prepared by reacting 0.5 mol sulfur dichloride with 1 mol resorcinol in the amount of 20.0 g and 29% aqueous ammonia 165.0 g.

Table 5 (Microwave-excited Plasma)

| Exper. No. | Gas | Treatment time(sec.) | Adhesion Against Peeling | |
|---|---|---|---|---|
| | | | Adhesive E kg/singly cord | Adhesive F kg/single cord |
| 31 | Air | 20 | 1.9 | 2.1 |
| | | 120 | 2.1 | 2.4 |
| 32 | $O_2$ | 20 | 2.1 | 2.4 |
| | | 120 | 2.7 | 2.9 |
| 33 | $N_2$ | 20 | 1.5 | 1.7 |
| | | 120 | 1.9 | 2.3 |
| 34 | Ar | 20 | 2.0 | 2.1 |
| | | 120 | 2.6 | 2.7 |
| 35 | He | 20 | 1.7 | 1.9 |
| | | 120 | 1.8 | 2.2 |
| 36 | CO | 20 | 2.0 | 2.3 |
| | | 120 | 2.6 | 2.4 |
| 37 | $CO_2$ | 20 | 2.0 | 2.1 |
| | | 120 | 2.1 | 2.2 |
| 38 | $SO_2$ | 20 | 1.9 | 2.3 |
| | | 120 | 2.2 | 2.5 |
| 39 | NO | 20 | 2.0 | 2.2 |
| | | 120 | 2.2 | 2.4 |
| Comp.Exp. 5 Adhesive E | | | 0.6 | |
| Comp.Exp. 6 Adhesive F | | | | 0.9 |
| Nontreatment 7 Two Step Method 1.0 | | | | |

In said comparative Experiment 7, the multifilament cord without treatment with plasma was bonded according to the Two Step Method of the prior art by impregnating said cord firstly with an 1000 g solution comprising water 850 g, 10% aqueous solution of sodium hydroxide in the amount of 10 g, 5% aqueous solution of dioctyl sodium sulfosuccinate 20 g, 2-pyrrolidone 100 g and Diglycidyl ether of glycerol (Epon 812 by Du Pont) followed by heating at 240°C for 60 seconds and then with an 1000 g solution comprising water 520 g, resorcinol 19 g, 35% aqueous formalin 24 g, 10% aqueous solution of sodium hydroxide in the amount of 17 g, 40% vinylpyridine-styrene-butadiene rubber latex 210 g and 40% styrene-butadiene rubber latex 210 g followed by further heating at 240°C for 60 seconds.

Example 6

Treatments described in Example 2 were repeated only except Adhesives E and F instead of Adhesive A, of which results are shown in following Table 6.

Table 6 (High Frequency Wave Excited Plasma)

| Exper. No. | Gas | Treatment time(sec.) | Adhesion Against Peeling | |
|---|---|---|---|---|
| | | | Adhesive E kg/single cord | Adhesive F kg/single cord |
| 40 | Air | 20 | 2.1 | 2.2 |
| | | 120 | 2.3 | 2.5 |
| 41 | $O_2$ | 20 | 2.4 | 2.6 |
| | | 120 | 2.8 | 3.0 |
| 42 | $N_2$ | 20 | 1.2 | 1.6 |
| | | 120 | 2.1 | 2.4 |
| 43 | Ar | 20 | 2.3 | 2.5 |
| | | 120 | 2.8 | 2.7 |
| 44 | He | 20 | 1.9 | 2.1 |
| | | 120 | 2.4 | 2.4 |
| 45 | CO | 20 | 1.5 | 2.1 |
| | | 120 | 2.7 | 2.9 |
| 46 | $CO_2$ | 20 | 1.9 | 2.0 |
| | | 120 | 2.3 | 2.4 |
| 47 | $SO_2$ | 20 | 2.0 | 2.2 |
| | | 120 | 2.3 | 2.7 |
| 48 | NO | 20 | 2.2 | 2.4 |
| | | 120 | 2.5 | 2.6 |
| 49 | CF4 | 120 | 2.6 | 3.0 |

Example 7

Treatments described in Example 5 were repeated except that gases to be excited for generating plasma are different therefrom, of which results are shown in following Table 7.

Table 7

| Exper. No. | Gas | (Torr) | Treatment time(sec.) | Adhesion Against Peeling | |
|---|---|---|---|---|---|
| | | | | Adhesive E Kg /single cord | Adhesive F Kg /single cord |
| 50 | $NH_4OH$ | 1 | 20 | 2.4 | 2.7 |
| 51 | $NH_4OH/O_2$ | 0.5+0.5 =1 | 20 | 2.5 | 3.0 |
| 52 | HCHO | 1 | 20 | 2.3 | 2.7 |
| 53 | $HCHO/O_2$ | 0.5+0.5 =1 | 20 | 2.4 | 2.8 |

Example 8

Treatments described in Example 4 were repeated except that the used adhesives are different therefrom, of which results are shown in following Table 8.

Table 8

| Exper. No. | Adhesive E | | | Adhesive F | | |
|---|---|---|---|---|---|---|
| | Initial Tensile Strength (Kg) | Initial Elonga-tion (%) | Strength Holding Rate (%) | Initial Tensile Strength (Kg) | Initial Elonga-tion (%) | Strength Holding Rate (%) |
| 31 | 50 | 4.9 | 60 | 51 | 4.8 | 58 |
| 32 | 52 | 5.0 | 65 | 52 | 4.9 | 56 |
| 33 | 51 | 4.9 | 58 | 51 | 4.8 | 64 |
| 34 | 53 | 5.2 | 66 | 52 | 4.8 | 66 |
| 35 | 50 | 4.9 | 63 | 50 | 4.8 | 67 |
| 36 | 52 | 5.0 | 68 | 52 | 5.0 | 68 |
| 37 | 50 | 4.7 | 62 | 50 | 4.7 | 63 |
| 38 | 49 | 4.6 | 59 | 49 | 4.7 | 62 |
| 39 | 50 | 4.8 | 59 | 51 | 4.9 | 62 |
| 40 | 51 | 5.0 | 61 | 50 | 4.9 | 60 |
| 41 | 52 | 5.0 | 66 | 52 | 5.0 | 69 |
| 42 | 50 | 4.7 | 59 | 50 | 4.8 | 62 |
| 43 | 52 | 5.1 | 65 | 52 | 5.1 | 69 |
| 44 | 51 | 4.8 | 62 | 51 | 4.9 | 63 |
| 45 | 52 | 4.8 | 63 | 52 | 4.8 | 60 |
| 46 | 51 | 4.9 | 60 | 52 | 4.9 | 60 |
| 47 | 50 | 4.7 | 55 | 51 | 4.8 | 60 |
| 48 | 49 | 4.7 | 54 | 49 | 4.7 | 59 |
| 49 | 51 | 4.9 | 62 | 52 | 5.0 | 63 |
| 50 | 52 | 4.9 | 66 | 50 | 4.7 | 65 |
| 51 | 53 | 5.0 | 62 | 50 | 4.7 | 62 |
| 52 | 51 | 4.8 | 65 | 50 | 4.8 | 64 |
| 53 | 51 | 4.7 | 65 | 52 | 4.9 | 60 |
| | | Comp. Exp. Nontreatment | | | | |
| | 50 | 4.7 | 45 | 51 | 4.8 | 47 |
| | | Two Step Method | | | | |
| | 50 | 4.8 | 31 | | | |

As seen from the results shown in said Tables, cord of aromatic polyamide fibers treated with plasma and bonded to rubber with the PFL adhesive, adhesion with rubber and flex fatigue are considerably improved.

Referential Example

The same cord of aromatic polyamide fibers as used in the preceding Examples was impregnated firstly with under coating liquid of the prescription mentioned at the beginning of the invention as to the two-step method as a prior art to be heated at 240°C for 60 seconds and then with conventionally used resorcinol-formaldehyde precondensate (RFL) adhesive of the following composition to be followed by heating at 240°C for 60 seconds.

| | |
|---|---|
| Water | 520.0 g |
| Resorcinol | 19.0 g |
| Aqueous solution of 35% formalin | 24.0 g |
| Aqueous solution of 10% sodium hydroxide | 17.0 g |
| 40% Vinylpyridine-styrene-buradiene rubber latex | 210.0 g |
| 40% Styrene-butadiene rubber latex | 210.0 g |
| | 1000 g |

Similar to Example 1 and 4 the adhesive and fiber cord physical properties were tested, of which results are;

| | |
|---|---|
| Adhesive Against Peeling | 1.0 kg/single cord |
| Initial Tensile Strength | 50.0 kg |
| Initial Elongation | 4.9% |
| Strength Holding Rate (After Imparting Fatigue) | 31.0% |

**Claims**

1. Method for adhering of aromatic polyamide fibers to rubber characterized by treating said fibers in an environment of low temperature plasma gas under a reduced pressure, impregnating said fibers with an adhesive comprising a precondensate of a phenol with an aldehyde and a rubber latex, heating said fibers impregnated with said adhesive, fixing said fibers onto unvulcanized rubber, and heating with pressing said two together for vulcanization and adhesion.

2. Method as set forth in Claim 1, characterized in that said adhesive is prepared by reacting a phenol with an aldehyde in the presence of an alkali metal hydroxide as catalyst, neutralizing the reaction product to separate a resinous product, dissolving said resinous product containing no freed aldehyde in diluted aqueous ammonia and mixing rubber latex thereto.

3. Method as set forth in Claim 2, characterized in that said phenol is phenol, m-cresol, m-methoxyphenol, m-chlorophenol or resorcinol and said aldehyde is formaldehyde.

4. Method as set forth in Claim 3, characterized in that adhesive is prepared by mixing a first adhesive comprising rubber latex and a high molecular weight precondensate of resorcinol and formaldehyde with a second adhesive comprising low molecular weight a precondensate of resorcinol and formaldehyde and a polyphenol polysulfide.

5. Method as set forth in Claim 4, characterized in that said high molecular weight precondensate is prepared by reacting 0.8—7.5 mols of formaldehyde with 1 mol of resorcinol and said low molecular weight precondensate is prepared by reacting 0.05—0.8 mols of formaldehyde with 1 mol of resorcinol.

6. Method as set forth in Claim 4, characterized in that said polyphenol polysulfide is represented by a formula;

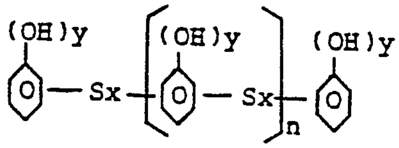

in which x represents an integer of 1—6, y represents an integer of 2—3 and n represents an integer of 1—15.

7. Method as set forth in Claim 3, characterized in that an aldehyde is used in the amount of more than

3 mols and more preferably of from 4 mols to 10 mols in relation to said phenol, m-cresol, m-methoxyphenol or m-chlorophenol.

8. Method as set forth in Claim 1, characterized in that said plasma gas is nonpolymerizable gas, polymerizable gas, gas vapourized at a room temperature under reduced pressure, gas thermally vapourized under reduced pressure or any mixture thereof.

9. Method as set forth in Claim 8, characterized in that said plasma gas is one selected from the group consisting of helium, hydrogen, argon, oxygen, nitrogen, air, chlorine, ammonia, carbon monoxide, carbon dioxide, sulfur dioxide gas, nitrogen monoxide, formaldehyde, hydrogen chloride, carbon tetrafluoride gas, carbon tetrachloride gas, halogenated hydrocarbon gas, water vapour, methylamine gas or any mixture thereof.

10. Method as set forth in Claim 9, characterized in that said gas is oxygen, carbon tetrafluoride gas or mixture thereof.

11. Method as set forth in Claim 8, characterized in that said plasma is excited by audiowaves, high frequency waves or microwaves.

**Patentansprüche**

1. Verfahren zum haftenden Verbinden von aromatischen Polyamidfasern mit Kautschuk, gekennzeichnet durch Behandeln der Fasern in einer Umgebung von Niedrigtemperatur-Plasmagas bei einem reduzierten Druck, Imprägnieren der Fasern mit einem Haftmittel, das ein Vorkondensat aus einem Phenol mit einem Aldehyd und einem Kautschuklatex beinhaltet, Erwärmen der mit dem Haftmittel imprägnierten Fasern, Fixieren der Fasern auf Rohgummi, und Erwärmen der Fasern und des Rohgummis unter Zusammendrückung derselben zur Vulkanisierung und haftenden Verbindung.

2. Verfahren nach Anspruch 1, dadurch gekennzeichnet, daß das Haftmittel gebildet wird durch Reagieren eines Phenols mit einem Aldehyd bei Anwesenheit eines Alkalimetallhydroxids als Katalysator, Neutralisieren des Reaktionsprodukts zur Abtrennung eines Harzprodukts, Lösen des kein freies Aldehyd enthaltenden Harzprodukts in verdünntem wässrigen Ammoniak sowie Zumischen von Kautschuklatex dazu.

3. Verfahren nach Anspruch 2, dadurch gekennzeichnet, daß es sich bei dem Phenol um Phenol, m-Kresol, m-Methoxyphenol, m-Chlorphenol oder Resorcin handelt und es sich bei dem Aldehyd um Formaldehyd handelt.

4. Verfahren nach Anspruch 3, dadurch gekennzeichnet, daß das Haftmittel gebildet wird durch Mischen eines ersten Haftmittels, das einen Kautschuklatex und ein ein hohes Molekulargewicht aufweisendes Vorkondensat aus Resorcin und Formaldehyd beinhaltet, mit einem zweiten Haftmittel, das ein ein niedriges Molekulargewicht aufweisendes Vorkondensat aus Resorcin und Formaldehyd und ein Polyphenol-Polysulfid beinhaltet.

5. Verfahren nach Anspruch 4, dadurch gekennzeichnet, daß das ein hohes Molekulargewicht aufweisende Vorkondensat gebildet wird durch Reagieren von 0,8—7,5 Mol Formaldehyd mit 1 Mol Resorcin und das ein niedriges Molekulargewicht aufweisende Vorkondensat gebildet wird durch Reagieren von 0,05—0,8 Mol Formaldehyd mit 1 Mol Resorcin.

6. Verfahren nach Anspruch 4, dadurch gekennzeichnet, daß das Polyphenol-Polysulfid durch eine Formel

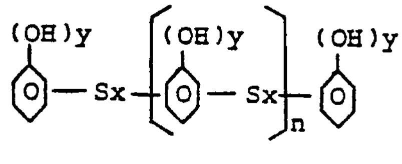

dargestellt wird, in der x ein ganze Zahl von 1—6, y eine ganze Zahl von 2—3 und n eine ganze Zahl von 1—15 darstellt.

7. Verfahren nach Anspruch 3, dadurch gekennzeichnet, daß ein Aldehyd in ener Menge von mehr als 3 Mol und in bevorzugterer Weise in einer Mente von 4 Mol bis 10 Mol bezogen auf das Phenol, m-Kresol, m-Methoxyphenol oder m-Chlorphenol verwendet wird.

8. Verfahren nach Anspruch 1, dadurch gekennzeichnet, daß es sich bei dem Plasmagas um nichtpolymerisierbares Gas, polymerisierbares Gas, bei Raumtemperatur unter reduziertem Druck verdampftes Gas, unter Wärmeeinwirkung unter reduziertem Druck verdampftes Gas oder jegliches Gemisch derselben handelt.

9. Verfahren nach Anspruch 8, dadurch gekennzeichnet, daß es sich bei dem Plasmagas um ein Gas handelt, das gewählt ist aus der Gruppe bestehend aus Helium, Wasserstoff, Argon, Sauerstoff, Stickstoff, Luft, Chlor, Ammoniak, Kohlenmonoxid, Kohlendioxid, Schwefeldioxidgas, Stickstoffmonoxid, Formaldehyd, Chlorwasserstoff, Tetrafluorokohlenstoffgas, Tetrachlorkohlenstoffgas, halogeniertem Kohlenwasserstoffgas, Wasserdampf, Methylamingas oder jeglichem Gemisch derselben.

10. Verfahren nach Anspruch 9, dadurch gekennzeichnet, daß es sich bei dem Gas um Sauerstoff, Tetrafluorkohlenstoffgas oder ein Gemisch davon handelt.

11. Verfahren nach Anspruch 8, dadurch gekennzeichnet, daß das Plasma durch Tonwellen, Hochfrequenzwellen oder Mikrowellen erregt wird.

**Revendications**

1. Procédé pour faire adhérer des fibres de polyamide aromatique au caoutchouc, caractérisé en ce que l'on traite lesdites fibres dans un milieu gaz sous forme de plasma à température basse sous pression réduite, l'on imprègne lesdites fibres avec un adhésif comprenant un précondensat d'un phénol avec un aldéhyde et un latex de caoutchouc, l'on chauffe lesdites fibres imprégnées avec ledit adhésif, l'on fixe lesdites fibres sur un caoutchouc non vulcanisé, et l'on chauffe tout en pressant ces deux derniers l'un contre l'autre pour la vulcanisation et l'adhérence.

2. Procédé selon la revendication 1, caractérisé en ce que ledit adhésif est préparé par réaction d'un phénol avec un aldéhyde en présence d'un hydroxyde de métal alcalin comme catalyseur, le produit de réaction étant neutralisé pour isoler un produit résineux, ledit produit résineux qui ne contient pas d'aldéhyde libéré étant dissout dans de l'ammoniaque aqueuse diluée et le latex de caoutchouc étant mélangé avec ceux-ci.

3. Procédé selon la revendication 2, caractérisé en ce que ledit phénol est le phénol, le m-crésol, le m-méthoxyphénol, le m-chlorophénol ou le résorcinol et ledit aldéhyde est le formaldéhyde.

4. Procédé selon la revendication 3, caractérisé en ce que ledit adhésif est préparé par mélange d'un premier adhésif comprenant du latex de caoutchouc et un précondensat de haut poids moléculaire de résorcinol et de formaldéhyde, avec un second adhésif comprenant un précondensat de faible poids moléculaire de résorcinol et de formaldéhyde et un polysulfure de polyphénol.

5. Procédé selon la revendication 4, caractérisé en ce que ledit précondensat de haut poids moléculaire est préparé en mettant à réagir 0,8 à 7,5 moles de formaldéhyde avec 1 mole de résorcinol, et ledit précondensat de faible poids moléculaire est préparé en mettant à réagir 0,05 à 0,8 moles de formaldéhyde avec 1 mole de résorcinol.

6. Procédé selon la revendication 4, caractérisé en ce que ledit polysulfure de polyphénol est représenté par la formule:

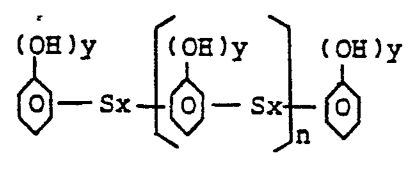

dans laquelle se représente un nombre entier de 1 à 6, y représente un nombre entier égal à 2 ou 3 et n représente un nombre entier de 1 à 15.

7. Procédé selon la revendication 3, caractérisé en ce qu'un aldéhyde est utilisé en une quantité supérieure à 3 moles et de préférence comprise entre 4 et 10 moles, par rapport auxdits phénol, m-crésol, m-méthoxyphénol ou m-chlorophénol.

8. Procédé selon la revendication 1, caractérisé en ce que ledit gaz sous forme de plasma est un gaz non polymérisable, un gaz polymérisable, un gaz vaporisé à température ambiante sous pression réduite, un gaz vaporisé par la chaleur sous pression réduite ou un mélange quelconque de ceux-ci.

9. Procédé selon la revendication 8, caractérisé en ce que ledit gaz sous forme de plasma est choisi parmi le groupe consistant en l'hélium, l'hydrogène, l'argon, l'oxygène, l'azote, l'air, le chlore, l'ammoniac, le monoxyde de carbone, le dioxyde de carbone, le dioxyde de soufre, le monoxyde d'azote, le formaldéhyde, chlorure d'hydrogène, le tétrafluorure de carbone, le tétrachlorure de carbone, les hydrocarbures halogénés, la vapeur d'eau, la méthylamine ou un mélange quelconque d'entre eux.

10. Procédé selon la revendication 9, caractérisé en ce que ledit gaz est l'oxygène, le tétrafluorure de carbone ou leur mélange.

11. Procédé selon la revendication 8, caractérisé en ce que ledit plasma est excité au moyen d'ondes sonores, d'ondes de haute fréquence ou de microondes.